# EUROPEAN PATENT APPLICATION

(11) **EP 0 818 547 A1**
(43) Date of publication of application: **14.01.1998**
(21) Application number: 97304756.6
(22) Date of filing: 01.07.1997
(51) Int. Cl.: C22B 21/00, C22B 7/00, B09B 3/00, C22B 1/00

(54) **Recovery of metals values from air bag inflators**

(30) Priority: 10.07.1996 US 676615
(71) Applicant: Autoliv ASP, Inc., Ogden, Utah 84405-1563 (US)
(72) Inventor: Miller, Harry W., II, Ogden, Utah 84403 (US); Morley, Jeff K., Hooper, Utah 84315 (US)
(74) Representative: Bankes, Stephen Charles Digby

(57) **Abstract**

A process is disclosed for recycling rejected, deployed or non-deployed automotive air bag inflators. Inflators are run through a machine that shears the inflator parts. The generant is separated and recovered. Aluminum parts are fed to a smelter for recovering the aluminum alloy. The separated generant is fed to the smelter as a fuel addition and the other metal parts are sent to scrap. It may he desirable to smelt other metal parts to remove any non-metallics. The smelting temperature may be varied and flux added to recover various metal values.

## Description

### BACKGROUND OF THE INVENTION

### 1. Field of the Invention

The present invention relates to a method for reclaiming/recycling deployed and non-deployed vehicle air bag inflators. Air bag inflators are widely used by vehicle manufacturers today and the sources for recycling are provided by air bag inflator/module unit and motor vehicle manufacturers, automobile dealerships, service and maintenance shops, automobile dismantlers automobile scrap processors and other parties in the industry chain.

### 2. Description of the Prior Art

It is well known and conventional to separate ferrous and non-ferrous metals from scrap automobile bodies by melting such scrap in a cupola or furnace by heating to a temperature sufficient to melt and recover the lower melting point non-ferrous materials and finally raising the temperature to melt the ferrous materials. U.S. Patent Nos. 3,323,908, 3,484,231, 3,556,500 and 3,917,239 are exemplary of such prior art. It is also known in the prior art to melt and separate non-ferrous metals, such as aluminum, from scrap containing ferrous components by rapidly melting the aluminum and separating the molten aluminum to avoid its contamination with iron. U.S. Patent Nos. 4,203,762 and 4,457,494 are exemplary of such prior art processes.

Air bag restraint systems which are inflated to restrain vehicle occupants in the event of a collision are now required by provisions of the Federal Motor Vehicle Safety Standards in all automobiles sold in the United States. Air bag inflator modules are metal assemblies that contain an inflationary gas source for inflating the air bag cushion. Air bag systems are broken down into individual designs based upon either pyrotechnic or hybrid specifications. Pyrotechnic systems incorporate a solid gas generant, e.g. sodium azide, as a direct gas, primarily nitrogen, generant. Hybrid systems utilize chemical gas generants to augment stored compressed inert gas, such as argon or nitrogen. Other generants include non-azide materials, fluid or liquid components, gaseous and exothermic materials.

Air bag inflator structural parts are typically constructed primarily from aluminum and ferrous alloy materials but other materials including both metallics and non-metallics are used in their manufacture. Attempts have been made in the industry to recover the metal values from air bag inflators. Manual or mechanical stripping has been used for separating and recovering the various metal parts from air bag inflators. But such methods are labor intensive and have not been adopted because they require further processing to obtain recyclable materials.

Cupola smelting has been used in the art to reclaim metals from fired air bag inflators Fired inflators are heated in a eupola furnace to melt the metal parts. The resulting metal end product comprises an aluminum alloy contaminated with other metals including iron in the form of deleterious iron-aluminium intermetallics. The contaminated aluminum has little commercial value and must be further processed. U.S. Patent No. 5,294,244 describes an inflator recovery process which comprises heating in a first smelting furnace to recover the aluminum values and separating out the non-aluminum products which are further treated in a second furnace to recover a stainless steel product. This patent broadly teaches reclaiming both fired and unfired inflators.

Morton International, Inc., the assignee of the instant invention, recycles air bag inflators at their Promotory, Utah facilities by melting and recovering the aluminum alloy values. Air bag inflators are collected and sorted into containers which are fed into a gas fired smelter furnace. The temperature of the furnace is raised to a temperature sufficient to fire any unfired inflators in the fed charge before the aluminum is melted and then the temperature is increased to 1700°F to melt the aluminum alloy component. The molten aluminium is caused to flow away from the smelter and is collected into a chamber where it is discharged into molds to form ingots which are subsequently recovered and sold. The residual materials including non-melted ferrous components of the inflators remain in the smelter and are recovered therefrom and sold as scrap.

### SUMMARY OF THE INVENTION

The recycling of discarded inflator/module units offers many potential benefits in terms of recovering significant quantities of the metals used in their manufacture. The method of the present invention is particularly advantageous in that the gas generant is recovered and is fed with the fuel to the gas fired smelter used to recover the metal values. The recovered generant material is blown into the smelter at a prescribed flow rate consistent with BTU demand.

The present invention is primarily directed to a method of recovering the aluminum alloy values used in manufacturing of the inflator structural parts. Metals used in manufacturing the various other inflator structural parts, such as low carbon steel, stainless steel, etc., which have a higher melting temperature than aluminium, are also recovered using the present invention. The method comprises the steps of subjecting the inflators to a shearing or shredding operation to break them apart, dumping the internal parts, separating the various metals by magnetic or other suitable means and segregating the generant material by screening, etc. After the shredding operation, the feed stock is screened to remove the gas generant material in the case of solid generant, i.e. pyrotechnic inflator systems. In the case of hybrid systems, appropriate means can be employed to recover the chemical gas generants, i.e. gases, liquids, etc. such as vacuum chambers, collection chambers, etc. If desired, the ferrous metal parts could be separated from the aluminium parts by magnetic separation or other appropriate means. After the shredding and screening step, the shredded feed stock can be subjected to a thermal heating step for removing the combustible materials such as silicone seals, wire coatings and plastics. The heat generated from the volatiles through combustion and decomposition is transferred to the scrap material by convection. The recovered aluminum parts are fed as a charge to the smelter and the recovered generant is concomitantly fed with the fuel gas for firing the smelter.

In the case of inflators having components manufactures from different aluminum alloys joined together, the feed stock can be treated to cause the joined components to become detached from each other. U.S. Patent No. 5,419,578 discloses a driver side inflator constructed of different aluminum alloys. This can be accomplished by heating the separated aluminum feed stock to a temperature sufficiently high to render fracture sensitive the alloy component having the lowest incipient melting temperature as described in U.S. Patent Nos 4,468,847 and 4,498,523. The different aluminum alloy parts can then be separated and recovered for melting to obtain their desired original alloy values.

The recovered non-aluminum (ferrous) materials can be collected as scrap and sold to a rebar company for recycling. It may be necessary to run the scrap through a furnace to combust the non-metallic materials, such as silicone seals, wire coatings, plastics, etc. After combustion of the non-metallics has occurred, the scrap material can be further heated to recover the various other metal values contained therein by methods known to those in the metals recovery art.

As an alternative method, only the generant is separated from the sheared inflator materials. The remaining materials are fed as a charge into the smelter and are separated by droff into the various metals contained therein such as aluminum, steel, nickel, molybdenum, copper, gold, etc. The separated/recovered generant is used as a fuel addition to the smelter used for recovering the metal values. The smelting conditions, i.e. temperature, fluxes, melt conditions, type of furnace, etc. may have to be varied to recover the various metals. Further, conventional fluxes may have to be added in order to droff (separate) the various metals such as steel, molybdenum, nickel, etc. Those skilled in the art are aware of commonly used flux materials which would provide such results.

The recovered pyrotechnic or chemical gas generant is fed along with the fuel gas into the smelter as an augmenting fuel source. The generant can be fed/blown by an appropriate apparatus into the heating portion of the furnace chamber at a prescribed flow rate consistent with BTU demand. The flow rate of the generant can be varied by adjusting the feeding apparatus in a known manner. Generants that can be handled by the present invention are in the form of wafers, pellets, ground generant powder, gas, liquid, etc.

While U.S. Patent No. 5,294,244 speaks of smelting either deployed or non-deployed inflators, the present inventors found that non-deployed inflators could not be fed into the smelter melt without first being sheared. Catastrophic failure of the smelter can occur when non-deployed inflators find their way into the aluminum melt. The discharging or firing of non-deployed inflators in the smelter produces an uncontrolled event which is detrimental to the integrity of the smelter and to the safety of the operators. One of the advantages of the present invention in shearing the inflator prior to charging them into the smelter and recovering the gas generant material for recycle as part of the fuel fed to the smelter is that it allows a precise control for the BTU heating capacity of the fuel gas. Another important advantage is that it disposes of potentially hazardous material in an environmentally safe manner.

It is understood by those in the art that the temperature of the smelter has to be precisely controlled to prevent contamination of the aluminum alloy with iron from the ferrous alloy parts of the inflator. Therefore, it is desirable to heat the aluminum alloy parts rapidly under a non-oxidizing atmosphere through a critical temperature range commencing at about 842°F to a temperature above the melting point of aluminum to quickly convert the aluminum to a liquid phase without formation of deleterious iron-aluminum intermetallic compounds. The smelter is typically heated by a natural gas burner operated under a neutral to reducing flame condition which produces an oxygen starved environment in which aluminum alloys do not burn. The temperature of the furnace is monitored in a known manner. By recovering and injecting the gas generant into the fuel stream to the furnace, one can precisely control the BTU heating capacity of the fuel and obtain the rapid heating required to avoid formation of iron-aluminum intermetallics.

### DETAILED DESCRIPTION OF THE INVENTION

The present invention relates to a method for the recovery of aluminium alloys, ferrous alloys and other metal values from air bag inflators. The air bag inflators may be of a variety of constructions and include driver, passenger and side models. The air bag inflators, processed by the present invention are generally undeployed but deployed inflators may be included in the feed materials.

The method of the invention produces an aluminum alloy product of generally the same composition as the aluminum alloy used in the original manufacture of the inflator and provides an environmentally safe manner of disposing of the gas generant, e.g. sodium azide. The net result of the process of this invention is the conversion of non-usable inflator units to recoverable metal values for industrial applications.

The aluminum alloy parts of the air bag inflator include the housing, end plates, and various other structural parts. The non-aluminum parts of the inflator include the gas filter assembly, the igniter assembly, the gas generant material, leads, seals, coatings, etc. The gas filter assembly is comprised of various filter layers of ferrous and non-metallic materials, e.g. ceramic paper. Both stainless and low alloy carbon steels are used in making the filter layers. The screens separating the gas generant wafers are also comprised of low carbon steel. Pressed low carbon steel end plates may be used depending upon the particular module application. Those in the art will appreciate that there are differences in the basic configurations of driver side, passenger and side impact inflators as well as in the combinations of materials used in their manufacture.

In a preferred method for recycling and reclaiming the metal values from air bag inflators according to the present invention, the inflators are first segregated by external configuration. The segregated inflators are then fed to a shearing station where they are sheared. The comminuted pieces resulting from shearing are then transferred by a conveyor to a screening operation where the pyrotechnic gas generant is recovered or in the case of chemical gas generants, e.g. gases, liquids, etc. to an appropriate recovery station. The metal parts can then be separated by employing magnetic or other means to separate the ferrous values from the non-ferrous values. The separated aluminium parts are transferred via a conveyor to a furnace for smelting under a non-oxidizing atmosphere by heating to a holding temperature in the range of about 1292°F to about 1832°F in a known manner. It is desirable to rapidly heat the aluminium through a critical range commencing at about 842°F to a temperature above the melting point of aluminum to quickly convert the aluminum to a liquid without formation of deleterious iron-aluminum compounds. Molten aluminum produced in the smelter is collected and poured into ingot molds and cooled. The recovered aluminum alloy from the air bag inflators is of generally the same alloy composition and weight percent of constituents as the aluminum alloy used in manufacturing the air bag inflator.

The remaining scrap material which consists mainly of ferrous materials is transferred to a collection area. The collected scrap can be sold to a rebar company for further processing. It may be necessary to process the remaining scrap material by heating the scrap mixture in a fuel combustion furnace to decompose non-metallics, such as silicone seals, wire coatings, plastics, etc. The volatile decomposition products carry the heat generated by combustion and decomposition and the heat content (enthalpy) thereof can be used to preheat the feed or fuel to the aluminium smelter or for other appropriate heat exchange purposes to recovery the enthalpy of such products.

In an alternative embodiment, only gas generant is separated from the comminuted inflator parts. In such an embodiment, after recovery of the generant, the remaining parts are smelted to recover aluminium alloy values. The remaining non-aluminum parts are recovered and subjected to a smelting operation to retrieve various other metal values by adding fluxes and heating the non-aluminum parts to a maximum temperature in the range of about 2600°F to about 3000°F, in a manner known to those in the art.

The crux of the present invention resides in recovering and injecting pyrotechnic or chemical gas generant material into the fuel used to fire the aluminum smelter as an additional fuel source. The generant can be blown into the aluminum smelter at a prescribed flow rate consistent with BTU demand. In an alternative embodiment, a portion or all of the recovered gas generant material could be injected along with fuel for combusting the non-metallics or, if necessary, with fuel used for firing the furnace employed for recovering non-aluminum metal values.

The smelting furnace used for recovering the aluminum alloy may be of a variety of constructions. As an example, the furnace described in U.S. Patent No. 5,294,244 can be employed, which operates on a prescribed mixture of natural gas and compressed air to provide the necessary BTU heating capacity for melting the aluminum. Further, a furnace of the type described in U.S. Patent No. 5,294,244 could be used for recovering the ferrous metal values in pig or billet form. U.S. Patent Nos. 3,984,090 and 4,457,494 describe furnaces and methods for extracting aluminium from scrap metal comprising iron and aluminum which apparatus could be used in practicing the invention. U.S. Patent Nos. 3,984,090, 4,457,494 and 5,294,244 are incorporated by reference herein. Those skilled in the art to which the present invention is directed will understand from reading the foregoing description that the present invention is directed to the novel method of recovering and employing the gas generant material from recycled inflators as an additional fuel component rather than being directed to any particular smelting method or apparatus for recovering metal values from recycled inflators.

## Claims

1. A method of recovering metal values from an air bag inflator comprising an aluminium alloy housing containing non-aluminium metallic parts as well as non-metallic parts including a gas filter assembly and gas generant material, comprising the steps of:
a) subjecting the air bag inflator to a shearing operation wherein said inflator is comminuted;
b) separating and recovering the various metallic and non-metallic materials from the shearing operation including the gas generant material;
c) feeding the separated and recovered aluminium alloy parts to a gas fuel fired smelter;
d) heating said aluminium alloy parts to a temperature sufficient to melt said parts by feeding at least part of said separated and recovered gas generant material into the inflow gas fuel to provide the necessary heating capacity for melting said aluminium alloy parts; and
e) recovering aluminium alloy.

2. A method according to claim 1 wherein the step of heating to the melting temperature of aluminium comprises heating the air bag inflator to a holding temperature in the range of 700 to 1000°C (1292°F to 1832°F).

3. A method according to claim 2 further comprising rapidly heating the aluminium alloy parts through a critical temperature range commencing at about 450°C (842°F) to a temperature above the melting point of the aluminium alloy parts to convert the aluminium quickly to a molten phase without any appreciable formation of iron-aluminium intermetallic compounds.

4. A method according to any preceding claim wherein the step of recovering said aluminium alloy comprises casting said molten aluminium into ingots which are of approximately the same purity as the original aluminium parts.

5. A method according to any preceding claim wherein the step of heating to melt the aluminium alloy parts of the inflator is conducted by feeding the parts into a natural gas fired furnace.

6. A method according to any preceding claim which further comprises feeding all the metallic and non-metallic comminuted materials from the shearing operation, except for the gas generant, into the smelter along with the aluminium parts.

7. A method according to claim 6 wherein sufficient heat is generated in the smelter to decompose the non-metallic materials.

8. A method according to claim 6 or claim 7 wherein the non-aluminium metallic residual from the inflator is recovered from the aluminium smelter.

9. A method according to claim 8 further comprising the step of recovering the various metals associated with non-aluminium residual from the aluminium smelter by:
adding a flux to said non-aluminium residual to form a charge;
placing the non-aluminium charge mixed with the added flux into a second furnace;
raising the temperature in said furnace to heat the added charge to a maximum temperature in the range of 1427 to 1649°C (2600°F to 3000°F) to melt the various metallic materials;
recovering the various metal values, including the ferrous metal values, as they melt in the charge.
